Europäisches Patentamt

European Patent Office

Office européen des brevets

(19)

(11) Publication number: 0 159 090
A1

# (12) EUROPEAN PATENT APPLICATION

(21) Application number: 85200550.3

(22) Date of filing: 10.04.85

(51) Int. Cl.⁴: **G 11 B 7/00**

(30) Priority: 17.04.84 JP 55429/84

(43) Date of publication of application:
23.10.85 Bulletin 85/43

(84) Designated Contracting States:
BE DE FR GB

(71) Applicant: N.V. Philips' Gloeilampenfabrieken
Groenewoudseweg 1
NL-5621 BA Eindhoven(NL)

(72) Inventor: Kawanaka, Yoshikazu
c/o INT. OCTROOIBUREAU B.V. Prof. Holstlaan 6
NL-5656 AA Eindhoven(NL)

(72) Inventor: Nakayama, Mitsuhisa
c/o INT. OCTROOIBUREAU B.V. Prof. Holstlaan 6
NL-5656 AA Eindhoven(NL)

(74) Representative: Schepens, Antonius Cornelis
Maria et al,
INTERNATIONAAL OCTROOIBUREAU B.V. Prof.
Holstlaan 6
NL-5656 AA Eindhoven(NL)

(54) Equipment which enables the words inscribed on a compact disc to be read while the disc is being played.

(57) Equipment which enables the words (6) inscribed on a compact disc (5) to be read while the disc is being stroboscopic techniques.

FIG.1

EP 0 159 090 A1

"Equipment which enables the words inscribed on a compact disc to be read while the disc is being played".

The invention relates to equipment which enables the words inscribed on a compact disc to be read while the disc is being played. In general a compact disc (referred to below as a disc) is rotated at about 520 rpm at high speed or at about 200 rpm at low speed when it is being played on a compact disc player, and since the speed is much higher than of a record player ($33^{1}/3$ rpm or 45 rpm) there is a problem in that it is not possible while the disc is being played to verify by means of the words which have been inscribed on the disc which disc is being played or what tunes are recorded on the disc. This invention is intended to overcome the problem mentioned above and, in order to achieve this aim, the design provides equipment which enables the words inscribed on a compact disc to be read while the disc is being played so that it is possible to find out such information as what music etc. has been recorded on the disc by reading the words etc. which have been inscribed on the surface of the disc while it is being played on a compact disc player. In order to achieve the aforementioned aim, the invention is characterized in that, in a compact disc player, there is established in the vicinity of the turntable or on the rotating shaft a detecting device which detects either optically or mechanically once during each rotation the period of rotation of the said rotating shaft of the turntable of the said player, that the said detecting device is linked to instantaneous light emitting equipment which is arranged in such a way that it illuminates the upper surface of the compact disc which has been mounted on the aforementioned turntable, and that visible light is directed on the top surface of the compact disc from the aforementioned instantaneous light emitting equipment each time the aforementioned shaft makes one revolution so that the words etc. which are inscribed on the surface of the compact disc can be read.

With the equipment of this invention it is possible to read the words etc. inscribed on the surface of a disc while it is being played and so the effect of the design it to render unnecessary the troublesome interruption of the player operation which has been required for this purpose in the past.

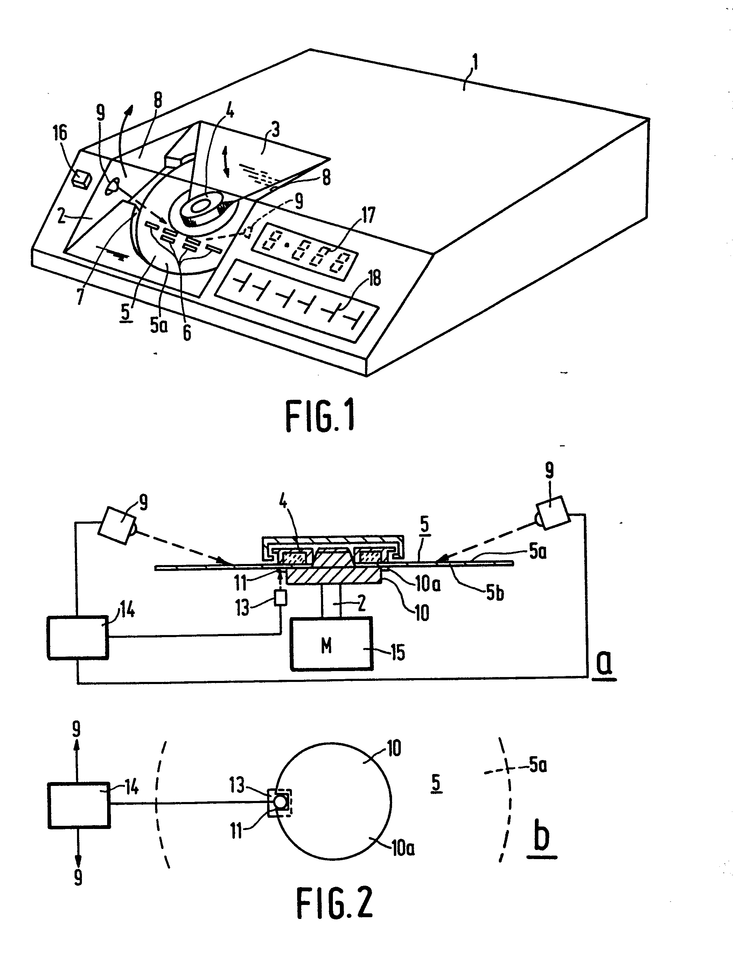

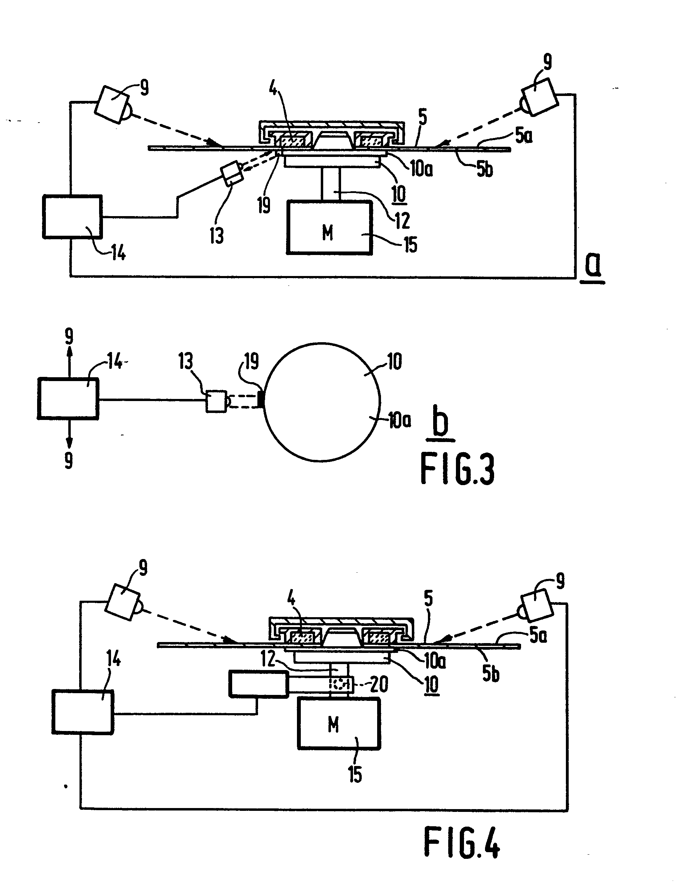

Figure 1 and figures 2(a) and 2(b) are an oblique view and outline drawings of the essential parts respectively of an example of equipment of this inventor figures 3(a) and 3(b) are outline drawings of the essential parts of a second example of this invention and figure 4 is an outline drawing of the essential parts of a third example of this invention. An example of equipment of this invention is described below with reference to the drawings.

In figures 1 and 2, 1 is the compact disc player, 2 is a cover which is made of a transparent material such as a resin for example and 3 is the arm of the disc clamper 4 which is constructed in such a way that it is able to move up and down. 5 is a disc, and the words 6 which provide information about the recording such as the name of the tune etc. are inscribed on the surface of the disc 5.

The two strobe lights (instantaneous light emitting devices) 9,9 which direct visible light onto the surface 5a of the disc 5 which has been mounted on the loading part are arranged in the concavities in the side parts 8,8 which have been formed in the loading part 1 for the disc 5 on the aforementioned compact disc player 1 (referred to below as the player). The strobe lamps 9,9 direct light onto the rear surface 5a of the disc which is being played on which the information relating to the tunes etc. is inscribed each time the rotating shaft 12 of the turntable 10 makes one revolution, passing the cut-away part 11 which is formed in the circumferential surface 10a of the turntable 10 of the player 1, being connected via the light emission control circuit 14 to the reflection type photosensor 13 which is an optical detecting device which receives reflected light, as shown in figures 2(a) and 2(b). In the drawings 15 is a motor, 16 is the power switch, 17 is the control display part and 18 is the key arrangement for the control display.

The operation of equipment of this invention is described below. Thus the disc 5 is first set on the player 1 and when it starts to play each rotation of the shaft 12 is detected by the reflection type photosensor 13 by way of the cut-away 11 in the turntable 10 and the signal detected in this way is input to the light emission control circuit 14.

Thus a control signal for directing bright visible light onto the surface 5a of the disc 5 so that the words 6 which are inscribed on the surface 5a of the disc 5 can be clearly read is put out from the light emission control circuit to the strobe lamps 9,9 and the strobe lamps illuminate the disc with a visible light which enables the words 6 on the disc 5 to be read on the basis of this control signal. At this time the disc 5 is rotating rapidly but the words 6 on the disc 5 appear to be stationary and can be read and since the words 6 on the surface 5a of the disc 5 can be read while the disc is being played on the player there is no need to go to the trouble of stopping the player 1 every time it is necessary to read the words 6 on the disc 5.

A second example of equipment of this invention is shown in figures 3(a) and 3(b). In this case there is no cut-away part 11 established in the turntable 11 but a light reflecting material 19 is attached to a part of the circumference of the turntable 10 and this construction is such that the rotation of the rotating shaft 12 is detected by the reflection type photosensor 13 and in this case the subsequent operation and the effects obtained are the same as in example 1.

A third example of equipment of this invention is shown in figure 4, and in this case a projection, insulating part and conducting part etc. 20 is established on part of the rotating shaft 1 and the rotation of the rotating shaft 12 is detected mechanically using the switching part 21 in place of the reflection type photosensor 13 in order to control the strobe lamps 9,9 and the subsequent operation and effects are the same as in example 1.

0159090
28-03-1985

## CLAIMS

1.        Equipment which enables the words inscribed on a compact disc to be read while the disc is being played on a compact disc player, characterized in that, in a compact disc player, there is established in the vicinity of the turntable or on the rotating shaft a detecting device which detects either optically or mechanically once during each rotation the period of rotation of the said rotating shaft of the turntable of the said player, that the said detecting device is linked to instantaneous light emitting equipment which is arranged in such a way that it illuminates the upper surface of the compact disc which has been mounted on the aforementioned turntable, and that visible light is directed onto the top surface of the compact disc from the aforementioned instantaneous light emitting equipment each time the aforementioned shaft makes on revolution so that the words etc. which are inscribed on the surface of the compact disc can be read.

0159090

1/2

FIG.1

FIG.2

FIG.3

FIG.4

**European Patent Office**

**EUROPEAN SEARCH REPORT**

Application number

| | | | EP 85200550.3 |
|---|---|---|---|

## DOCUMENTS CONSIDERED TO BE RELEVANT

| Category | Citation of document with indication. where appropriate. of relevant passages | Relevant to claim | CLASSIFICATION OF THE APPLICATION (Int Cl 4) |
|---|---|---|---|
| X | US - A - 3 896 454 (HOSTERMAN) <br> * Fig. 1,14,15; abstract; column 3, lines 13-61 * | 1 | G 11 B 7/00 |
| X | US - A - 2 787 199 (HIGONNET et al.) <br> * Fig. 1,2; column 1, line 51 - column 2, line 41 * | 1 | |
| A | DE - A1 - 3 217 543 (COMPUGRAPHIC) <br> * Fig. 2; abstract * | 1 | |
| | | | **TECHNICAL FIELDS SEARCHED (Int. Cl 4)** |
| | | | G 11 B 7/00 <br> B 41 B 15/00 <br> G 06 K 7/00 |

The present search report has been drawn up for all claims

| Place of search | Date of completion of the search | Examiner |
|---|---|---|
| VIENNA | 12-07-1985 | BERGER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document. but published on. or after the filing date
D : document cited in the application
L : document cited for other reasons

& : member of the same patent family, corresponding document

EPO Form 1503 03 82